# EUROPÄISCHE PATENTSCHRIFT

(11) **EP 2 540 520 B1**
(45) Veröffentlichungstag und Bekanntmachung des Hinweises auf die Patenterteilung: **19.04.2017**
(21) Anmeldenummer: 12186017.5
(22) Anmeldetag: 04.06.2008
(51) Int. Cl.: B44C 5/04, B44C 3/02, B32B 21/00

(54) **Laminierte Dekorplatte**
Laminated decorative panel
Plaque de décor laminée

(30) Priorität: 04.06.2007 DE 102007026170
(43) Veröffentlichungstag der Anmeldung: 02.01.2013
(62) Teilanmeldung aus: 08760454.2
(73) Patentinhaber: Surface Technologies GmbH & Co. KG, 15837 Baruth (DE)
(72) Erfinder: Buhlmann, Carsten, 15834 Rangsdorf (DE)
(74) Vertreter: Michalski Hüttermann & Partner Patentanwälte mbB

(56) Entgegenhaltungen:
- EP-A1- 1 262 607
- WO-A-03/095202
- DE-A1- 2 501 625
- US-A- 3 654 044

## Beschreibung

Die Erfindung betrifft eine laminierte Dekorplatte nach dem Anspruch 1. Gattungsgemäße Dekorplatten sind beispielsweise aus der WO 03/095202 A1 bekannt. Sie bestehen aus einem plattenförmigen Kern aus einem Faserwerkstoff, der auf einer Seite eine harzhaltige Zwischenlage, eine Dekorschicht und eine mit einem Relief versehene Deckschicht, auf der anderen Seite eine Gegenzugschicht aufweist. Die Dekorschicht stellt eine grafische Abbildung der Oberfläche eines limitierten Werkstoffs dar. Dabei muss das Relief der Deckschicht passgenau über dem Muster der Dekorschicht angeordnet sein. Dies wird erreicht, indem die üblicherweise aus einem bedruckten Papier bestehende Dekorschicht vorzugsweise ohne Kleberimprägnierung auf die Zwischenlage aufgelegt wird, wodurch eine Änderung in der Abmessung gegenüber dem Reliefstempel für die Deckschicht vermieden wird.

Dabei wird die harzhaltige Zwischenlage vor der Heißverpressung als feste Beschichtung auf dem Kern oder als separate vorgefertigte Klebeschicht ausgebildet. Der Klebergehalt dieser Schicht muss dann je nach der Saugfähigkeit der angrenzenden Schichten während der Heißverpressung bemessen werden. Außerdem ist es notwendig, das bedruckte Dekorpapier vor der Heißverpressung zuzuschneiden und passgenau auf die vorbereitete Kernplatte zu legen.

DE2501625 offenbart eine laminierte Dekorplatte hergestellt nach einem Verfahren bestehend aus den Verfahrensschritten: Bereitstellen einer Platte aus Sperrholz, die den Kern der Dekorplatte bildet, Aufbringen eines Harzklebstoffs, im Beispiel offenbart wird eine Mischung aus Harnstoffharz und Vinylacetat, welches halb getrocknet wird, Aufwalzen eines nicht mit Harz imprägnierten bedruckten Dekorpapiers auf die Harzklebstoffschicht, Aufbringen eines transparenten Harzüberzugs auf die Papierschicht und Hitzehärtung.

Die Erfindung stellt sich die Aufgabe, eine laminierte Dekorplatte zu schaffen, die einfacher und kostengünstiger herzustellen ist.

Diese Aufgabe wird durch eine Dekorplatte nach Anspruch 1 gelöst.

Es wurde nämlich gefunden, dass eine gesonderte Herstellung der harzhaltigen Zwischenlage nicht mehr notwendig ist, wenn ein flüssiger, durch Druck und/oder Wärme aushärtbarer Leim verwendet wird. Dieser Leim kann im gleichen Arbeitsgang aufgetragen werden, bei dem die Dekorschicht und gegebenenfalls die Deckschicht angebracht werden. Ein Zuschneiden der Dekorschicht ist überflüssig, da die Passgenauigkeit mit üblichen Maßnahmen der Drucktechnik gewährleistet werden kann. Dadurch ergibt sich eine wesentliche Vereinfachung und Kostensenkung des Herstellungsverfahrens.

Die Saugfähigkeit des Kerns und der Dekorschicht kann nun unmittelbar im Herstellungsprozess über den Leimauftrag berücksichtigt werden. Eine Vorratshaltung speziell beschichteter Kern- oder Zwischenlagematerialien ist unnötig.

Der flüssige, durch Druck und/oder Wärme aushärtbare Leim ist bevorzugt ein Harnstoff-Formaldehydleim. Solche Leime werden gewöhnlich als Zweikomponentensystem geliefert und unmittelbar vor der Anwendung gemischt. Sie können durch Erwärmen gehärtet werden. Bestimmte Produkte härten aber auch bereits bei Umgebungstemperatur unter Druck hinreichend aus, um die Dekorschicht zu fixieren. Ein geeignetes Produkt ist beispielsweise Adhesive 1206 mit Härter 2547 der Firma Casco Adhesives, Stockholm, Schweden.

Ein ebenfalls bevorzugter Leim ist Melamin-Formaldehydleim. Es ist vorteilhaft und dient der Vereinfachung des Herstellungsverfahrens, wenn hierzu das gleiche Produkt wie für die Herstellung der Deckschicht verwendet wird. Brauchbar sind auch Melamin-Harnstoff-Formaldehydleime.

In einer bevorzugten Ausführungsform ist die Deckschicht zellulosefrei ausgebildet. Sie enthält insbesondere keine zellulosefaserhaltigen Trägerschichten wie Papier oder dergleichen. Bevorzugte Materialien für die Deckschicht sind Melaminharze oder Acryllacke. Auch PVC ist brauchbar. In diese Deckschichtmaterialien lassen sich feine Pulver harter Feststoffe inkorporieren, wodurch die Abriebfestigkeit erhöht wird. Hierzu eignet sich beispielsweise Korund.

Zellulosefreie Deckschichten haben den Vorteil höherer Transparenz. Außerdem sind sie einfacher und kostengünstiger herzustellen, weil kein faserhaltiges Trägermaterial benötigt wird und dessen gesonderte Imprägnierung wegfällt.

Die Deckschicht kann in Form einer Folie aus thermoplastischem Material oder auch als Flüssigkeit auf die Dekorschicht aufgetragen werden.

Als Dekorschicht genutzt wird bedrucktes Papier.

Die bedruckte Seite kann mit einem dünnen Lackfilm überzogen sein, der jedoch die Papierschicht nicht imprägniert und deren Maße nicht verändert.

Als Kernmaterial eignen sich Faserwerkstoffe wie Faserplatten hoher (HDF) oder mittlerer Dichte (MDF) oder auch Spanplatten. Besonders bevorzugt ist HDF.

Wenn die Dekor- und die Deckschicht nur auf einer Seite des Kerns vorhanden sind, ist es zweckmäßig, auf der anderen Seite eine sogenannte Gegenzugschicht anzubringen, um ein Verziehen oder eine Krümmung der fertigen Platte infolge von Temperatur- oder Feuchtigkeitseinflüssen zu verhindern. Die Dicke dieser Schicht ist auf die Beschichtung der anderen Seite abzustimmen. Für die Schicht geeignet ist beispielsweise ein neutrales Papier mit einem festen oder flüssigen Harz als Leim.

Beschrieben wird auch ein Verfahren zur Herstellung der oben beschriebenen erfindungsgemäßen laminierten Dekorplatte. Dieses Verfahren ist im Vergleich zum Stand der Technik einfacher, weil es in zwei Arbeitsgängen ausführbar ist. Es ist nämlich möglich, das Auftragen des flüssigen, unter Druck und/oder Wärme aushärtenden Leims, das Auflegen und Aufpressen der Dekorschicht und das Anbringen des Gegenzugs in einem Arbeitsgang als Kaschierverfahren auszuführen und danach die Deckschicht in einem zweiten Arbeitsgang als flüssige Schicht oder Folie aufzubringen und die gesamte Schichtstruktur dann unter Druck und Wärme auszuhärten, wobei gleichzeitig in der Oberfläche der Deckschicht durch ein geeignet ausgebildetes Presswerkzeug die Reliefstruktur geformt wird. Im ersten Arbeitsgang kann man dabei ohne Anwendung von Wärme arbeiten. Der zweite Arbeitsgang kann sich unmittelbar an den ersten anschließen, so dass ein kontinuierliches Arbeiten möglich ist. Im ersten Arbeitsgang wird eine Kalanderpresse verwendet die mit geeigneten Zuführungsvorrichtungen für das Kernmaterial und die Dekorschicht sowie das Gegenzugmaterial und mit Auftragsvorrichtungen für den flüssigen Leim versehen ist. Nach dem Kalandrieren kann die Platte gegebenenfalls getrennt und in einer Kurztaktpresse mit der Deckschicht versehen und unter Druck und Wärme ausgehärtet werden. Dieser zweite Arbeitsgang kann auch in einer beheizten Doppelbandpresse kontinuierlich ausgeführt werden, wobei die Platte danach nach Bedarf getrennt werden kann.

Das Presswerkzeug (z.B. Platte oder Walze) zur Formung des Oberflächenreliefs kann auf das Muster der Dekorschicht ausgerichtet werden, beispielsweise mittels photoelektrisch gelesener Passmarken auf der Dekorschicht. Dadurch wird die Imitation eines Werkstoffs, bei dem Oberflächenporen und sichtbares Muster korreliert sind, z.B. Holz, verbessert. Es kann auch kontinuierlich gearbeitet werden, weil die Dekorschicht nicht mehr zugeschnitten und ggf. manuell auf den Kern aufgelegt zu werden braucht.

Selbstverständlich kann das Produkt nach dem ersten Arbeitsgang ggf. auch zwischengelagert werden.

Die erfindungsgemäße Dekorplatte lässt sich auch mit besonders tiefen Oberflächenstrukturen herstellen, wenn die Zwischenschicht beim Prägen noch nachgiebig ist und/oder die Dicke der Deckschicht geeignet gewählt wird.

Das erfindungsgemässe Produkt benötigt auch kein besonders hochwertiges Druckbasispapier für die Dekorschicht, um eine gute Ausrichtung von graphischem Muster und Oberflächenrelief zu erreichen.

Im Folgenden werden zwei Ausführungsbeispiele für die erfindungsgemäße laminierte Dekorplatte und für die zu deren Herstellung angewandten Verfahren angegeben.
A) Schichtaufbau der Dekorplatte mit einem Harnstofformaldehydleim (von oben nach unten):
   1) Flüssig aufgetragene Deckschicht aus Melaminharz oder vorher imprägnierter Overlayfilm. In beiden Fällen ist in der Deckschicht Korund eingebettet, welches abriebhemmend wirkt.
   2) Gedrucktes Dekorpapier entweder trocken (d.h. nicht imprägniert) oder als Finishfolie mit einem dünnen Lackfilm beschichtet.
   3) Schicht mit Harnstofformaldehydleim.
   4) HDF-Platte
   5) Schicht mit Harnstofformaldehydleim.
   6) Gegenzugpapier zum Abdecken der unteren Leimschicht (optional notwendig).

   Beim Verfahren zur Herstellung dieser Platte werden die Schichten von 2) bis 6) in einem Kaschierverfahren miteinander fest verklebt. Die Schicht 1 wird anschließend in einer Kurztaktpresse oder in einer kontinuierlich arbeitenden Doppelbandpresse in das Dekorpapier eingepresst, wobei ein Teil der abriebfesten Melaminschicht die Oberfläche verschließt. Bei diesem Vorgang wird auch eine Reliefstruktur mit eingepresst.
B) Schichtaufbau einer Dekorplatte mit Flüssigmelamin als verbindende Harzleimschicht (von oben nach unten):
   1) Flüssig aufgetragene Deckschicht aus Melaminharz. In dieser ist Korund eingebettet, welches abriebhemmend wirkt.
   2) Gedrucktes Dekorpapier: Dieses Dekorpapier ist trocken, jedoch kann beim Pressen Melaminharz von unten und oben in das Papier eindringen.
   3) Flüssig aufgetragene Schicht aus Melamin.
   4) HDF-Platte
   5) Eine Gegenzugschicht wie unter a) Punkt 5 und 6 beschrieben.

Beim Verfahren zur Herstellung dieser Platte ist es möglich, in nur einem Arbeitsgang trockenes Dekorpapier auf einer Trägerplatte (z.B. HDF-Platte) aufzupressen, indem die oben aufgeführten Schichten 2. bis 5. in einem ersten Teilschritt kalt zwischen 2 Kalanderwalzen angepresst bzw. aufgelegt und anschließend in einer Kurztaktpresse oder in einer kontinuierlich arbeitenden Doppelbandpresse unter der Einwirkung von Wärme und Druck miteinander verpresst werden. Der Arbeitsgang "Imprägnierung" ist bei diesem Vorgang nicht mehr notwendig.

## Patentansprüche

1. Laminierte Dekorplatte hergestellt nach einem Verfahren bestehend aus den Verfahrensschritten:
a) Bereitstellen einer HDF, MDF, oder Spanplatte als Kern,
b) Aufbringen einer flüssigen Schicht eines Harnstoffformaldehydleims oder Melamin auf den Kern,
c) Aufbringen eines trockenen bedruckten Dekorpapiers auf die in Schritt b) aufgebrachte Schicht;
d) Aufbringen einer Gegenzugschicht auf der anderen Seite des Kerns,
e) kaltes Pressen des so erhaltenden Schichtaufbaus in einer Kalanderpresse.

## Claims

1. Laminated decorative panel produced according to a method comprising the method steps:
a) providing a HDF, MDF or chipboard as a core;
b) applying a liquid layer of a urea formaldehyde glue or melamine onto the core;
c) applying a dry printed decorative paper onto the layer applied in step b);
d) applying a backing layer onto the other side of the core; and
e) cold pressing the resulting laminated structure in a calender press.

## Revendications

1. Plaque de décor laminée fabriquée selon un procédé composé des étapes de procédé :
a) mise à disposition d'une plaque de fibres de densité élevée HDF, de fibres de densité moyenne MDF ou d'un panneau aggloméré servant de partie centrale,
b) application d'une couche liquide d'une colle urée-formaldéhyde ou de mélamine sur la partie centrale,
c) application d'un papier décor imprimé sec sur la couche rapportée dans l'étape b) ;
d) application d'une couche de compensation sur l'autre face de la partie centrale,
e) pressage à froid du stratifié ainsi obtenu dans une presse de calandrage.
